# EUROPÄISCHE PATENTANMELDUNG

(11) **EP 3 199 272 A1**
(43) Veröffentlichungstag der Anmeldung: **02.08.2017**
(21) Anmeldenummer: 16198365.5
(22) Anmeldetag: 11.11.2016
(51) Int. Cl.: B23B 27/00, B23B 27/04, B23B 27/14

(54) **SCHNEIDWERKZEUG FÜR DIE SPANENDE BEARBEITUNG EINES WERKSTÜCKES**

(30) Priorität: 28.01.2016 DE 102016000899
(71) Anmelder: Universität Kassel, 34125 Kassel (DE)
(72) Erfinder: Heise, Christoph, 34466 Wolfhagen (DE); Schwarte, Stefan, 34414 Warburg (DE); Böhm, Stefan, 38179 Schwülper (DE)
(74) Vertreter: Patentanwälte Walther Hinz Bayer PartGmbB

(57) **Zusammenfassung**

Die vorliegende Erfindung betrifft ein Schneidwerkzeug (1) für die spanende Bearbeitung eines Werkstückes, insbesondere Schneideinsatz für die Drehbearbeitung, für einen Wendelbohrer, zur Bestückung eines Fräskopfes und dergleichen, mit einem Grundkörper (10) und mit einer am Grundkörper (10) ausgebildeten Schneidkante (11, 11a, 11b, 11c, 11d, 11e) zur Wechselwirkung mit dem Werkstück. Erfindungsgemäß weist die Anbindung der Schneidkante (11, 11a, 11b, 11c, 11d) an den Grundkörper (10) wenigstens eine Sollbruchstelle (12) auf, an der die Schneidkante (11, 11a, 11 b, 11c, 11d) bei Verschleiß unter Freilegung wenigstens einer weiteren Schneidkante (11 a, 11b, 11c, 11d, 11e) abtrennbar ist.

## Beschreibung

Die Erfindung betrifft ein Schneidwerkzeug für die spanende Bearbeitung eines Werkstückes, insbesondere Schneideinsatz für die Drehbearbeitung, für einen Wendelbohrer, zur Bestückung eines Fräskopfes und dergleichen, mit einem Grundkörper und mit einer am Grundkörper ausgebildeten Schneidkante zur Wechselwirkung mit dem Werkstück.

### STAND DER TECHNIK

Schneidwerkzeuge für die spanende Bearbeitung von Werkstücken sind in der industriellen Anwendung weit verbreitet. Die Schneidwerkzeuge weisen dabei eine geometrisch bestimmte Schneide auf und grenzen sich damit ab von Schneidwerkzeugen mit einer geometrisch unbestimmten Schneide, also beispielsweise zur Schleifbearbeitung. Die Schneidwerkzeuge der hier interessierenden Art dienen beispielsweise zur Drehbearbeitung, zur Fräsbearbeitung oder zur Hobelbearbeitung von Werkstücken, und beispielsweise sind Schneidwerkzeuge in Form von Schneideinsätzen bekannt, die für die Drehbearbeitung dienen können, oder die Schneideinsätze dienen als Bestückung eines Wendelbohrers oder eines Fräskopfes.

Das Schneidwerkzeug weist dabei einen Grundkörper auf, an dem die Schneidkante zur Wechselwirkung mit dem Werkstück ausgebildet ist, und der Schneideinsatz mit dem Grundkörper wird beispielsweise an einem Werkzeughalter zur Drehbearbeitung aufgenommen oder der Schneideinsatz wird über den Grundkörper an einem Bohrer oder einem Fräser angeordnet, beispielsweise durch einen Kraft- oder Formschluss oder häufig auch durch eine stoffflüssige Verbindung. Das hat den Vorteil, dass der Grundkörper des Werkzeugs einen einfacheren, preiswerteren Stahl aufweisen kann, und für den spanabhebenden Prozess dient der Schneideinsatz, der aus einem beispielsweise pulvermetallurgisch hergestellten Material besteht und entsprechend kleine Abmessungen aufweist. Schneidwerkzeuge der hier interessierenden Art beziehen sich damit auf den eigentlichen Einsatz an einem Werkzeughalter oder beispielsweise in einem Bohrer oder einem Schaftfräser, unabhängig davon, ob das Schneidwerkzeug vom Aufnahmesystem gelöst werden kann oder nicht.

Beispielsweise zeigt die DE 36 24 673 C2 ein Schneidwerkzeug für die spanende Bearbeitung eines Werkstückes, das einen sogenannten Schneideinsatz bildet. Derartige Schneideinsätze werden auch als Schneidplatten oder Wendeschneidplatten bezeichnet, abhängig davon, wie viele Schneidkanten am Schneideinsatz ausgebildet sind. Solche Schneideinsätze sind in der Regel aus einem Schnellarbeitsstahl, aus Hartmetall und/oder können pulvermetallurgisch hergestellt sein.

Ein weiteres Beispiel eines Schneidwerkzeugs für die spanende Bearbeitung eines Werkstückes offenbart die DE 195 45 648 A1. Das Schneidwerkzeug wird durch den Schneideinsatz für einen Bohrer gebildet, und der Schneideinsatz wird an der Bohrerspitze aufgenommen, um in direkte Wechselwirkung mit dem Werkstück zu gelangen.

Bei der industriellen Anwendung von Schneidwerkzeugen ist eine besonders lange Standzeit von besonderer Bedeutung. Durch die Auswahl besonders harter Stähle oder weiterer Werkstoffe wie Keramiken können die Standzeiten zwar deutlich verlängert werden, bei einem Verschleiß der Schneidkante wird das gesamte Schneidwerkzeug mit seinem Grundkörper jedoch in der Regel erneuert, insbesondere wenn es sich um keramische oder pulvermetallurgisch hergestellte Schneidwerkzeuge handelt. Ein Nachschärften der Schneidwerkzeuge ist allenfalls bei Schnellarbeitsstählen vorteilhaft möglich, beispielsweise mittels einer Schleifbearbeitung der Schneidkante, wofür jedoch der Schneidvorgang bei der Bearbeitung des Werkstückes unterbrochen werden muss, und wodurch Stillstandzeiten erzeugt werden.

Bei Schneidwerkzeugen mit geometrisch unbestimmter Schneide sind Selbstschärfungseffekte nutzbar, beispielsweise wenn Schneidkörner aus dem Materialverbund einer Schleifscheibe ausbrechen, wodurch neue, wiederum scharfe Schneidkörner freigelegt werden. Das Prinzip der kontinuierlichen Selbstschärfung ist jedoch bei Schneidwerkzeugen mit geometrisch bestimmter Schneidkante nicht ohne weiteres möglich. Beispielsweise offenbart die DE 10 2004 052 682 A1 ein selbstschärfendes, sogenanntes schnitthaltiges Schneidwerkzeug für Mühlen. Das Prinzip der Selbstschärfung wird durch eine gezielte Abrasion des Schneidwerkzeuges erzielt, und basiert neben den geometrischen Ausgestaltungen des Schneidwerkzeugs auf der Kombination gezielter Oberflächenhärtung, beziehungsweise der Ausbildung einer harten Beschichtung, die aufgebracht ist auf einem Grundkörper geringerer Härte. Die harte Beschichtung bildet dabei mit einem Scheidrand die Schneidkante aus. Durch einen abrasiven Verschleiß des Grundkörpers schärft sich die an der Beschichtung ausgebildete Schneidkante selbsttätig nach, indem kleinste Materialeinheiten durch Abrasion aus dem Schneidrand der Beschichtung ausgelöst werden. Ein derartiges Schneidwerkzeug ist jedoch für die Anwendung eines Zerspanprozesses insbesondere von metallischen Werkstücken nicht möglich. Ein weicheres Trägermaterial für den Grundkörper würde bereits zu einem Versagen des Schneidwerkzeuges führen, beispielsweise bei einer Drehbearbeitung oder einer Fräsbearbeitung.

### OFFENBARUNG DER ERFINDUNG

Aufgabe der Erfindung ist die Weiterbildung eines Schneidwerkzeugs für die spanende Bearbeitung eines Werkstückes, das eine besonders lange Standzeit aufweist und für die Bearbeitung metallischer Werkstoffe geeignet ist.

Diese Aufgabe wird ausgehend von einem Schneidwerkzeug für die spanende Bearbeitung eines Werkstückes gemäß dem Oberbegriff des Anspruches 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass die Anbindung der Schneidkante an den Grundkörper wenigstens eine Sollbruchstelle aufweist, an der die Schneidkante bei Verschleiß unter Freilegung wenigstens einer weiteren Schneidkante abtrennbar ist.

Kern der Erfindung ist die Einbringung von Sollbruchstellen, die parallel zur Schneidkante verlaufen, und bei Überschreiten einer verschleißbedingt ansteigenden Kraft kann ein Materialteil aus dem Schneidwerkzeug abplatzen oder abbrechen, um eine neue wiederum scharfe Schneidkante freizulegen. Diese neue Schneidkante bewirkt gegenüber dem verschlissenen Zustand der abgeplatzten oder abgebrochenen Schneidkante reduzierte Bearbeitungskräfte und eine bessere Oberflächenqualität bei der Bearbeitung des Werkstückes. Im Laufe der Bearbeitung steigen die Kräfte anschließend erneut an, so dass bei einem weiteren Überschreiten der zulässigen Bruchkraft die nächste Schneidkante freigelegt wird. Das Resultat ist ein kontinuierlich ablaufender Selbstschärfungsmechanismus ohne äußeren Eingriff. Der vorliegend verwendete Begriff der Schneidkante bezieht sich dabei nicht auf eine Kante im mathematischen Sinne sondern auf einen Abschnitt des Schneidwerkzeugs, an dem die eigentliche Schneidkante selbst ausgebildet ist. Dieser Abschnitt kann bei einer Abtrennung als einzelnes Bruchstück vom Grundkörper gelöst werden, wodurch erfindungsgemäß eine nächste Schneidkante freigelegt wird.

Die Sollbruchstelle ist zur eingriffslosen Umsetzung der erfindungsgemäßen Selbstschärfung des Schneidwerkzeuges so ausgebildet, dass die Abtrennung der Schneidkante im Schneidprozess auslösbar ist. Dabei ist die Sollbruchstelle insbesondere so ausgebildet, dass die Abtrennung der Schneidkante durch eine verschleißbedingt anwachsende Schneidkraft auslösbar ist. Mit zunehmendem Verschleiß der Schneidkante steigt die Schneidkraft stark an, so dass das Abtrennen der Schneidkante mit zunehmendem Verschleiß selbsttätig eingeleitet wird. Die Sollbruchstelle ist insbesondere so ausgebildet, dass eine Bruchkraft zur Abtrennung einer Schneidkante kleiner ist als eine verschleißbedingt anwachsende Schneidkraft. Die notwendige Bruchkraft kann durch die Ausgestaltung der Sollbruchstelle entsprechend eingestellt werden, und eine geringere Bruchkraft führt zu einem häufigeren Abtrennen von Sollbruchstellen, wohingegen eine höhere Bruchkraft einen Verschleiß der Schneidkante weiter fortschreiten lässt, bis diese schließlich abplatzt oder abbricht.

Die Sollbruchstelle ist auf verschiedene Weise herstellbar. Beispielsweise wird die Sollbruchstelle durch eine lokale Modifikation einer pulvermetallurgischen Herstellung des Grundkörpers mit der Schneidkante erzeugt. Auch ist es denkbar, dass jede der Sollbruchstellen durch eine entsprechende Bruchauslösegeometrie gebildet wird. Das Schneidwerkzeug weist eine Spanfläche auf, auf der die Schneidkraft im Wesentlichen orthogonal fußt, und die Bruchauslösegeometrie ist gemäß einem möglichen Ausführungsbeispiel als Kerbe in der Spanfläche ausgebildet, welche Kerbe parallel zum Verlauf der Schneidkante verläuft. Die Sollbruchstellen, also beispielsweise die einzelnen Bruchauslösegeometrien, können dabei einen Abstand von weniger als 100µm und/oder von weniger als 50µm zueinander aufweisen.

An die Spanfläche des Schneidwerkzeuges können sich Seitenflächen anschließen, die die Länge der Schneidkante begrenzen und zwischen denen sich die Spanfläche und damit auch die Schneidkante erstreckt. Die oberseitige Spanfläche ist dabei ebenfalls von den Seitenflächen begrenzt. In den Seitenflächen befinden sich gemäß einer vorteilhaften Weiterbildung geometrische Einschnitte zur Einbringung einer Schwächung, und durch die Einschnitte kann ein Bruchverlauf der abtrennbaren Schneidkante bestimmt werden.

Die Schneidkanten bilden als Abschnitte des Grundkörpers platten-, schuppen- oder muschelartig abtrennbare Materialteile aus, welche Materialteile einen Werkstoff aufweisen, der sich gemäß einem weiteren Beispiel zur Bildung der Sollbruchstelle vom Werkstoff des Grundkörpers unterscheidet. Beispielsweise können zwischen den einzelnen abtrennbaren Schneidkanten Schichtaufbauten unterschiedlicher Werkstoffe vorgesehen sein, um einen definierten Materialteil zu bilden, der sich als Schneidkante vom Grundkörper ablösen kann. Beispielsweise können die Materialteile mit ausgebildeter Schneidkante eine sehr hohe Härte aufweisen, und zwischen den Materialteilen erstrecken sich Werkstoffschichten, die eine geringe Härte oder Haftung zum Schneidkantenteil aufweisen. Bei einem Erreichen der Bruchkraft durch die Schneidkraft kann die Trennung der Schneidkante in den Materialbereichen zwischen den abtrennbaren Materialteilen erfolgen, beispielsweise durch definiert begrenzt belastbare stoffschlüssige Materialverbindungen. Mit weiterem Vorteil ist es denkbar, dass zwischen den platten-, schuppen- oder muschelartig abtrennbaren Materialteilen zur Bildung der Schneidkanten untereinander und/oder zur Anbindung an den Grundkörper eine Fügeebene ausgebildet ist, welche Fügeebene die Sollbruchstelle bildet. Der wechselweise Schichtaufbau mit den Materialteilen, an denen die Schneidkanten ausgebildet sind und mit den Zwischenmaterialien wird beispielsweise durch Abscheideverfahren oder durch sonstige Auftragsverfahren hergestellt.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine perspektivische Ansicht eines Schneidwerkzeugs mit einer beispielhaften Anzahl von Schneidkanten,
- Figur 2: das Schneidwerkzeug gemäß Figur 1, wobei eine erste Schneidkante vom Grundkörper des Schneidwerkzeugs abgetrennt wurde und
- Figur 3: das Schneidwerkzeug gemäß Figur 1, wobei zwei Schneidkanten vom Grundkörper abgetrennt wurden.

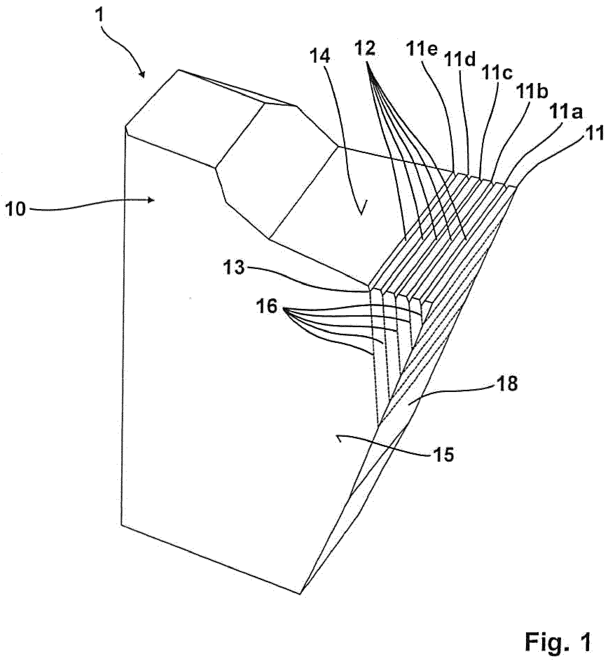

Figur 1 zeigt in vereinfachter Weise ein Schneidwerkzeug 1 für die spanende Bearbeitung eines Werkstückes, insbesondere aus einem metallischen Werkstoff. Das Schneidwerkzeug 1 weist einen Grundkörper 10 auf, und der Grundkörper 10 ist in Richtung der Schneidkante 11 oberseitig von einer Spanfläche 14 und seitlich von Seitenflächen 15 begrenzt. An einer Vorderseite des Grundkörpers 10 ist eine Schneidkante 11 ausgebildet. Die Schneidkante 11 wird bei Einsatz des Schneidwerkzeuges 1 mit dem Werkstück in Wechselwirkung gebracht, um vom Werkstück einen Span abzuheben.

Erfindungsgemäß sind am Schneidwerkzeug 1 weitere Schneidkanten 11 a, 11 b, 11 c, 11 d und 11 e ausgebildet. Die Ausbildung der weiteren Schneidkanten 11 a, 11 b, 11 c, 11 d und 11 e wird, wie das Ausführungsbeispiel zeigt, hervorgerufen durch in der Spanfläche 14 eingebrachte Sollbruchstellen 12. An den Seitenflächen 15 sind geometrische Einschnitte 16 eingebracht, wobei die perspektivische Darstellung lediglich eine vordere Seitenfläche 15 zeigt.

Die Sollbruchstellen 12 sind gemäß dem gezeigten Ausführungsbeispiel durch Bruchauslösegeometrien 13 in der Spanfläche 14 ausgebildet. Alternativ besteht die Möglichkeit, Sollbruchstellen bei der pulvermetallurgischen Herstellung des Schneidwerkzeuges 1 herzustellen, so dass diese nicht oder nicht nur geometrisch ausgebildet sind. Das vorliegende Ausführungsbeispiel beschränkt sich dabei auf die Beschreibung von Sollbruchstellen 12 in Form von Bruchauslösegeometrien 13, die beispielsweise durch Kerben oder Einritzungen in der Spanfläche 14 gebildet sind.

Verschleißt die vorderseitige Schneidkante 11 durch den Eingriff in das Werkstück während der spanenden Bearbeitung, so nehmen die Prozesskräfte der spanenden Bearbeitung zu. Insbesondere die Schneidkraft, die senkrecht auf der Spanfläche 14 fußt, steigt dabei stark an. Der Anstieg wird hervorgerufen durch zunehmende Verrundungen der Schneidkante 11, so dass die Schneidkraft auf die Schneidkante 11 wirkt und die Schneidkräfte in den Grundkörper 10 eingeleitet werden.

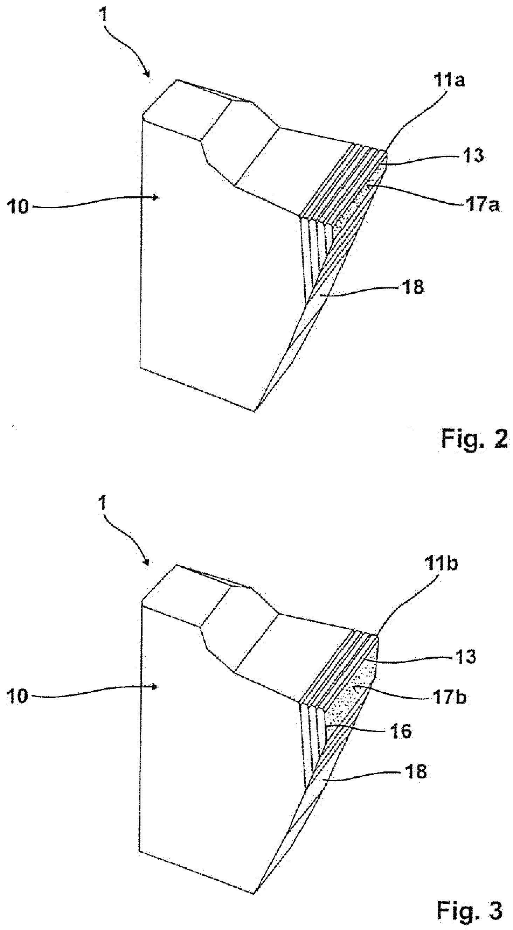

Bei Erreichen einer Bruchkraft zur Abtrennung der Schneidkante 11 durch die Schneidkraft kann eine erste vordere Schneidkante 11 in Form eines Materialteils vom Grundkörper 10 abgetrennt werden, wie in Zusammenhang mit der folgenden Figur 2 gezeigt.

Figur 2 zeigt eine Ansicht des Schneidwerkzeuges 1 nach dem Abtrennen einer ersten Schneidkante, so dass die weitere Schneidkante 11 a die vordere Schneidkante bildet, die mit einem Werkstück in Eingriff gebracht werden kann. Durch das Abtrennen der ersten Schneidkante 11 entsteht eine erste Bruchfläche 17a, die die Freifläche für die weitere Bearbeitung mit dem Schneidwerkzeug 1 bildet. Die vordere Schneidkante 11 a wird durch den vormals ausgebildeten Verlauf der Brauchauslösegeometrie 13 gebildet, wobei die Bruchauslösegeometrie 13, beispielsweise in Form einer Kerbe oder einer Nut, so ausgebildet ist, dass diese als weitere Schneidkante 11 geeignet ist. Dabei spielt die Bruchauslösegeometrie 13 als Teil der Schneidkante 11 a nur eine untergeordnete Rolle, da diese Abmessungen im Mikrometerbereich aufweist.

Figur 3 zeigt das Schneidwerkzeug 1 nach einem weiteren Abtrennen der Schneidkante 11 a gemäß Figur 2. Dadurch wird die Schneidkante 11 b zur vordersten Schneidkante für den Werkstückeingriff und auf der Vorderseite des Schneidwerkzeuges 1 wird die zweite Bruchfläche 17b freigelegt, so dass die Weiterverwendung des Schneidwerkzeuges 1 auf gleiche Weise erfolgen kann wie die Weiterverwendung des Schneidwerkzeuges 1 gemäß Figur 2, und die technische Funktion des Schneidwerkzeugs 1 mit den weiteren abgebrochenen Schneidkanten 11 und 11 a ist die gleiche wie die technische Funktion gemäß Figur 1.

Durch die in die Seitenflächen 15 eingebrachten geometrischen Einschnitte 16 wird der Materialteil definiert, der beim Abtrennen der Schneidkante 11 vom Grundkörper 10 gelöst wird. Insbesondere kann durch die Ausgestaltung der Bruchauslösegeometrie 13 und der geometrischen Einschnitte 16 eine Kerbwirkung ausgenutzt werden, so dass klar definierte Bruchfläche 17a und 17b entstehen.

Die zeichnerischen Darstellungen der Figuren 1 bis 3 zeigen das Schneidwerkzeug 1 mit den erfindungsgemäß ausgebildeten Schneidkanten 11, 11 a, 11 b, 11 c, 11 d und 11 e nicht maßstäblich. Die Abstände der einzelnen Schneidkanten 11, 11 a, 11 b, 11 c, 11 d und 11 e untereinander betragen beispielsweise nur wenige Mikrometer, insbesondere weniger als 100µm und bevorzugt weniger als 5µm. Die größer werdenden Bruchflächen 17a und 17b, bedingt durch die größeren Materialteile bei Abtrennung der jeweiligen Schneidkante 11, 11 a, 11 b, 11 c, 11 d und 11e, führen dazu, dass grundsätzlich immer die vorderste Schneidkante 11, 11 a, 11 b, 11 c, 11 d und 11 e durch ein Wegbrechen abgetrennt wird, da die größeren Bruchflächen in Richtung zu weiter innen liegenden Schneidkanten bis zur Schneidkante 11 e größere Bruchkräfte erfordern. Um die Bruchkräfte im Wesentlichen gleich auszugestalten, können die einzelnen Bruchauslösegeometrien 13 unterschiedlich ausfallen. Beispielsweise kann die vordere Bruchauslösegeometrie 13 in Form einer Nut oder einer Anritzung eine kleinere Tiefe aufweisen als die hinteren Bruchauslösegeometrien 13. Ebenfalls können die geometrischen Einschnitte 16 in den Seitenflächen 15 unterschiedlich zueinander ausgeführt sein, um im Wesentlichen gleiche Bruchkräfte zu erreichen, so dass die jeweiligen Schneidkanten 11, 11a, 11b, 11 c, 11d und 11e alle etwa im gleichen Verschleißzustand abbrechen.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

### Bezugszeichenliste:

- 1: Schneidwerkzeug
- 10: Grundkörper
- 11: Schneidkante 11a Schneidkante
- 11 b: Schneidkante
- 11 c: Schneidkante
- 11 d: Schneidkante
- 11 e: Schneidkante
- 12: Sollbruchstelle
- 13: Bruchauslösegeometrie
- 14: Spanfläche
- 15: Seitenfläche
- 16: geometrischer Einschnitt
- 17a: erste Bruchfläche
- 17b: zweite Bruchfläche

## Patentansprüche

1. Schneidwerkzeug (1) für die spanende Bearbeitung eines Werkstückes, insbesondere Schneideinsatz für die Drehbearbeitung, für einen Wendelbohrer, zur Bestückung eines Fräskopfes und dergleichen, mit einem Grundkörper (10) und mit einer am Grundkörper (10) ausgebildeten Schneidkante (11, 11 a, 11 b, 11 c, 11d, 11e) zur Wechselwirkung mit dem Werkstück,
**dadurch gekennzeichnet,**
**dass** die Anbindung der Schneidkante (11, 11a, 11 b, 11 c, 11 d) an den Grundkörper (10) wenigstens eine Sollbruchstelle (12) aufweist, an der die Schneidkante (11, 11a, 11 b, 11 c, 11 d) bei Verschleiß unter Freilegung wenigstens einer weiteren Schneidkante (11a, 11 b, 11 c, 11 d, 11e) abtrennbar ist.

2. Schneidwerkzeug (1) nach Anspruch 1,
**dadurch gekennzeichnet,**
**dass** die Sollbruchstelle (12) so ausgebildet ist, dass die Abtrennung der Schneidkante (11, 11 a, 11b, 11 c, 11d) im Schneidprozess auslösbar ist.

3. Schneidwerkzeug (1) nach Anspruch 1 oder 2,
**dadurch gekennzeichnet,**
**dass** die Sollbruchstelle (12) so ausgebildet ist, dass die Abtrennung der Schneidkante (11, 11a, 11 b, 11 c, 11d) durch eine verschleißbedingt anwachsende Schneidkraft auslösbar ist.

4. Schneidwerkzeug (1) nach einem der Ansprüche 1 bis 3,
**dadurch gekennzeichnet,**
**dass** die wenigstens eine Sollbruchstelle (12) so ausgebildet ist, dass eine Bruchkraft zur Abtrennung einer Schneidkante (11, 11 a, 11 b, 11c, 11d) kleiner ist als eine verschleißbedingt anwachsende Schneidkraft.

5. Schneidwerkzeug (1) nach einem der vorgenannten Ansprüche,
**dadurch gekennzeichnet,**
**dass** die wenigstens eine Sollbruchstelle (12) durch eine lokale Modifikation einer pulvermetallurgischen Herstellung des Grundkörpers (10) mit der Schneidkante (11, 11a, 11 b, 11 c, 11 d) erzeugt ist.

6. Schneidwerkzeug (1) nach einem der vorgenannten Ansprüche,
**dadurch gekennzeichnet,**
**dass** die wenigstens eine Sollbruchstelle (12) mittels einer zugeordneten Bruchauslösegeometrie (13) erzeugt ist.

7. Schneidwerkzeug (1) nach einem der vorgenannten Ansprüche,
**dadurch gekennzeichnet,**
**dass** die mehreren Sollbruchstellen (12') einen Abstand von weniger als 100µm und/oder von weniger als 50µm zueinander aufweisen.

8. Schneidwerkzeug (1) nach einem der vorgenannten Ansprüche,
**dadurch gekennzeichnet,**
**dass** sich an die Schneidkante (11, 11a, 11 b, 11c, 11d, 11 e) eine Spanfläche (14) anschließt, zu der eine während der spanenden Bearbeitung auftretende Schneidkraft orthogonal verlaufen kann, wobei sich beidseitig zur Spanfläche (14) jeweilige Seitenflächen (15) anschließen, in denen wenigstens eine Schwächung durch einen geometrischen Einschnitt (16) eingebracht ist, um einen Bruchverlauf zu bestimmen.

9. Schneidwerkzeug (1) nach einem der vorgenannten Ansprüche,
**dadurch gekennzeichnet,**
**dass** die Schneidkanten (11, 11 a, 11 b, 11c, 11d, 11 e) platten-, schuppen- oder muschelartig abtrennbare Materialteile bilden, welche Materialteile einen Werkstoff aufweisen, der sich vom Werkstoff des Grundkörpers (10) unterscheidet.

10. Schneidwerkzeug (1) nach Anspruch 9,
**dadurch gekennzeichnet,**
**dass** zwischen den platten-, schuppen- oder muschelartig abtrennbaren Materialteilen zur Bildung der Schneidkanten (11,11a, 11 b, 11 c, 11 d, 11 e) untereinander und/oder zur Anbindung an den Grundkörper (10) eine Fügeebene ausgebildet ist, welche Fügeebene die Sollbruchstelle (12) bildet.
